# EUROPÄISCHE PATENTANMELDUNG

(11) **EP 0 694 946 A1**
(43) Veröffentlichungstag der Anmeldung: **31.01.1996**
(21) Anmeldenummer: 95110944.6
(22) Anmeldetag: 12.07.1995
(51) Int. Cl.: H01H 71/02, H01H 71/10

(54) **Aus einpoligen Einheiten zusammengesetzter mehrpoliger Leitungsschutzschalter**

(30) Priorität: 28.07.1994 DE 4426816
(71) Anmelder: HEINRICH KOPP AG, D-63796 Kahl (DE)
(72) Erfinder: Flohr, Peter, Dipl.-Ing., D-63796 Kahl (DE)
(74) Vertreter: Reinhard - Skuhra - Weise & Partner

(57) **Zusammenfassung**

Eine Vorrichtung zur Herstellung einer mehrpoligen Leitungsschutzschaltereinheit (30) aus einzelnen Leitungsschutzschaltern (31,32,33) besteht aus wenigstens einem rahmenförmigen Zwischenteil (10) mit einem Mitnehmer zur kinematischen Auslösekupplung benachbarter Leitungsschutzschalter (31,32,33) und wenigstens zwei Verbindungselementen (44,45), die wenigstens ein Zwischenteil (10) übergreifen und mit ihren jeweiligen Enden jeweils an einem Gehäuse eines Leitungsschutzschalters (31,32,33) befestigbar sind. Hierdurch wird die Lagerhaltung für verschiedene mehrpolige Leitungsschutzschaltereinheiten überflüssig, und bei der Installation können nach Bedarf entsprechende mehrpolige Leitungsschutzschaltereinheiten schnell und problemlos hergestellt werden.

## Beschreibung

Die Erfindung betrifft eine Vorrichtung zur Herstellung einer mehrpoligen Leitungsschutzschaltereinheit aus einzelnen ein- oder zweipoligen Leitungsschutzschaltern.

Bezweckt wird die Schaffung einer Vorrichtung mit der sich mehrpolige Leitungsschutzschaltereinheiten in einfacher Weise individuell aus einzelnen ein- oder zweipoligen Leitungsschutzschaltern ggf. vor Ort im Bedarfsfall herstellen lassen, wobei bei die hergestellten mehrpoligen Leitungsschutzschaltereinheiten sowohl den Anforderungen an wechselseitiger thermischer Isolierung als auch kinematischer Verbindung der durch Überstrom und/oder drohende Überhitzung auslösbaren Auslösehebelkinematiken der einzelnen Leitungsschutzschalter genügen.

Bisher ist es üblich, für jeden Anwendungsfall einen speziellen ein- oder mehrpoligen Leitungsschutzschalter vorzusehen. Hierdurch vergrößert sich der Bedarf an Lagerhaltung, weil nicht nur einpolige, sondern auch zwei- und mehrpolige Einheiten separat auf Lager gehalten werden müssen.

Aus dem DE - G 92 03 138.2 ist es bereits bekannt, einpolige Leitungsschutzschalter nebeneinander auf einer üblichen Profilschiene anzuordnen und durch zusätzliche spezielle Verbindungselemente mechanisch miteinander zu koppeln. Dabei ist für die Ankopplung der Schaltgriffe beispielsweise ein Verbindungsstück vorgesehen, während ein Mitnehmer die Auslösehebelkinematik benachbarter einpoliger Leitungsschutzschalter verbindet. Nachteilig ist jedoch bei dieser vorbekannten Lösung, daß das Verbindungselement selbst keine ausreichende Isolierung bietet. Bei einem derartig aufgebauten mehrpoligen Leitungsschutzschalter kommt es daher in nachteiliger Weise dazu, daß sich die einzelnen einpoligen Leitungsschutzschalter aufgrund elektrothermischer Erwärmung unterschiedlich und unerwünscht beeinflussen.

Um diese Wirkung zu beseitigen bzw. auszugleichen, setzt man bisher einpolige Leitungsschutzschalter mit unterschiedlich aufgebauten oder unterschiedlich eingestellten elektrothermischen Auslösern ein, was jedoch unwirtschaftlich ist und bei der Fertigung zu logistischen Problemen führt.

Aus dem DE-G 70 44 973.9 ist ein Abstandshalter für die Distanzierung zweier benachbarter Leitungsschutzschalter bekannt, der zwar rahmenförmig ausgebildet ist und Lüftungsschlitze, jedoch keine Funktionselemente zur wechselseitigen Kopplung benachbarter Leitungsschutzschalter aufweist.

Der Erfindung liegt die Aufgabe zugrunde, eine Vorrichtung zur individuellen Herstellung mehrpoliger Leitungsschutzschaltereinheiten aus einzelnen thermisch isolierten und funktionsgekoppelten ein- oder zweipoligen Leitungsschutzschaltern verfügbar zu machen.

Erfindungsgemäß wird diese Aufgabe durch die im Patentanspruch 1 genannten Merkmale gelöst. Bevorzugte Merkmale, die die Erfindung vorteilhaft weiterbilden, sind den nachgeordneten Patentansprüchen zu entnehmen.

In vorteilhafter Weise schafft die Erfindung demgemäß eine Vorrichtung zur Herstellung einer mehrpoligen Leitungsschutzschaltereinheit aus einzelnen ein- oder zweipoligen Leitungsschutzschaltern, die aus wenigstens einem rahmenförmigen Zwischenteil mit einem Mitnehmer zur kinematischen Auslösekopplung benachbarter Leitungsschutzschalter und wenigstens zwei Verbindungselementen besteht, die wenigstens ein Zwischenteil übergreifen und mit ihren jeweiligen Enden jeweils an einem Gehäuse eines Leitungsschutzschalters befestigbar sind. Damit besteht die Möglichkeit, nicht nur aus einpoligen, sondern auch aus zweipoligen Leitungsschutzschaltern je nach den individuellen Bedürfnissen funktionssichere Leitungsschutzschaltereinheiten vor Ort herzustellen und zu montieren. Gleichzeitig bietet die erfindungsgemäße Vorrichtung in einer bevorzugten Weiterbildung vorteilhaft die Möglichkeit, elektrische Verbindungsbrücken und Bezeichnungsschilder zusammen mit einzelnen Zwischenteilen und Verbindungselementen sowie Leitungsschutzschaltern als Verkaufseinheit bzw. Set zu konfektionieren.

Für den Aufbau der Leitungsschutzschaltereinheiten ist es besonders günstig, wenn die Verbindungselemente mit ihren Enden an den Gehäusen der Leitungsschutzschalter einrastbar sind, weil hierdurch vorteilhaft Festschraubvorgänge vermieden werden können und sich die Montage außerordentlich einfach gestaltet. Dabei ist bevorzugt vorgesehen, daß die Verbindungselemente an anliegenden Seiten, vorzugsweise an einer Oberseite und einer Unterseite der Gehäuse der Leitungsschutzschalter angreifen, um eine sichere Verbindung zu gewährleisten.

Gemäß einer bevorzugten Ausgestaltung der Erfindung bestehen die Verbindungselemente aus Federklammern, die nur ein Zwischenteil überbrücken. Andererseits können jedoch auch längere Federklammern zum Einsatz kommen, die zwei und mehr Zwischenteile mit zwischengeordneten Leitungsschutzschaltern überbrücken.

Nach einer bevorzugten weiteren Ausgestaltung der Erfindung weist das rahmenförmigen Zwischenteil Kühlschlitze auf und ist bevorzugt als Zentrierrahmen ausgebildet, der beiderseits wenigstens zwei Zentrieranformungen besitzt, die in vorhandene Gehäusebefestiungsbohrungen der benachbarten Leitungsschutzschalter eingreifen.

Falls die Zentrieranformungen nach einer weiteren Ausgestaltung jeweils eine durchgehende Bohrung aufweisen, kann für die Herstellung von mehrpoligen Leitungsschutzschaltereinheiten auch statt der an der Gehäuseaussenseite angreifenden Federklemmen eine Verbindung duch Schrauben oder Nieten erfolgen.

Der Zentrierrahmen weist zur weiteren Verbesserung seiner thermischen Isaliereigenschaft nach einer bevorzugten weiteren Ausgestaltung der Erfindung im Bereich der Rahmenmittelebene eine Trennwand auf, die bis auf einen Mitnehmerschwenkbereich durchgehend verläuft.

Vorteilhaft ist weiterhin, wenn die für den wechselseitigen Abstand benachbarter Leitungsschutzschalter sorgende Breite des Zentrierrahmens der halben oder mehrfachen Hälfte der Breite eines Schutzschalters entspricht, damit Leitungsschutzschaltereinheiten mit üblichem Rastermaß erstellt werden können.

Der Zierrahmen besteht bevorzugt entweder aus Kunststoff oder wenigstens teilweise aus Metall, vorzugsweise Aluminium.

Nachfolgend wird die Erfindung unter Bezugnahme auf die beigefügten Zeichnungen näher erläutert. Es zeigen:
- Fig. 1: eine Seitenansicht auf ein Ausführungsbeispiel eines Zwischenteils in Form eines fungierenden Zentrierrahmens;
- Fig. 2: einen Schnitt entlang der Schnittlinie II-II durch Fig. 1;
- Fig. 3: eine den Einbauzustand berücksichtigende Unteransicht einer dreipoligen Leitungsschutzschaltereinheit aus drei einzelnen einpoligen Leitungsschutzschaltern und zwei Zwischenteilen; und
- Fig. 4: eine Seitenansicht auf die Einheit gemäß Fig. 3.

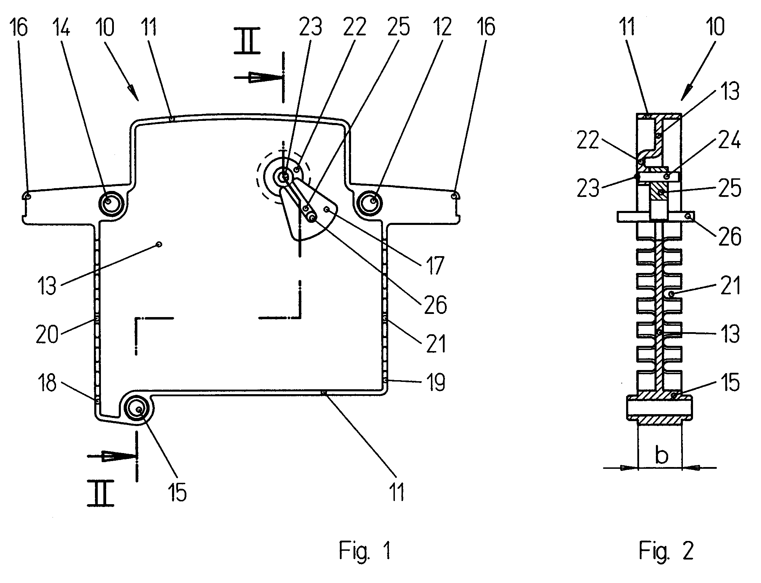

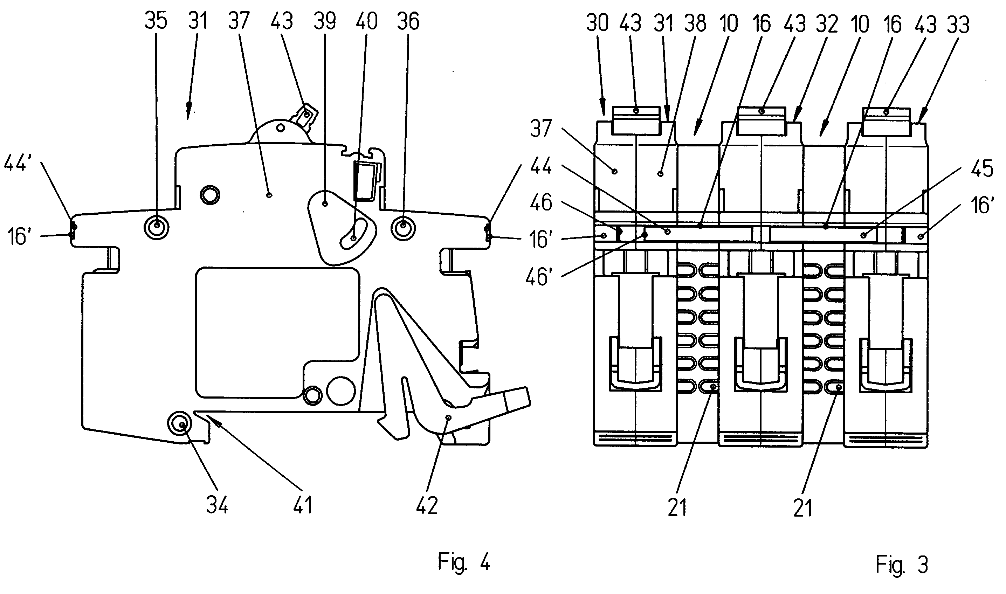

In Fig. 1 ist eine Seitenansicht eines Zwischenteils in Form eines Zentrierrahmens 10 gezeigt, der in seiner Außenkontur annähernd der Außenkontur eines üblichen einpoligen Leitungsschutzschalters entspricht, wie in Fig. 4 gezeigt. Der Zentrierrahmen 10 besitzt ein umlaufendes, flaches Rahmenprofil 11 und eine im Bereich der Rahmenmittelebene durchgehend bis auf einen Mitnehmerschwenkbereich 17 angeformte Trennwand 13. Im randseitigen Rahmenprofil 11 an Verstärkungsabschnitten sind Zentrieranformungen 12, 14 und 15 gebildet, die eine durchgehende Bohrung aufweisen. Ferner sind gegenüberliegende Befestigungsprofileinformungen 16, für Federklammern 44, 44', 45 (Fig. 3 + 4) sowie an gegenüberliegenden Rahmenprofilabschnitten 18 und 19 Kühlschlitze 20 und 21 vorgesehen. In der Einbaustellung des Zentrierrahmens 10 zwischen zwei einpoligen Leitungsschutzschaltern an einer nicht dargestellten Profilschiene liegen die Kühlschlitze 21 unten und die Kühlschlitze 20 oben, um entstehende Wärme durch Konvektion zuverlässig abzuführen.

Wie näher dem Schnitt gemäß Fig. 2 zu entnehmen ist, besitzt der Zentrierrahmen 10 angrenzend an den Mitnehmerschwenkbereich 17 eine an der Trennwand 13 gebildete Lageranformung 22, die sich aus der Trennwandebene zu dem seitlichen Randbereich des Zentrierrahmens 10 erstreckt und eine Lagerbohrung 23 besitzt. In der Lagerbohrung 23 ist eine Schwenkwelle 24 gelagert, die einstückig mit einem Schwenkarm 25 verbunden ist, an dessen Ende ein sich seitlich über den Rand des Zentrierrahmens 10 hinaus erstreckender Mitnehmer 26 befestigt ist. Der Mitnehmer 26 hat die Form eines Zylinderstiftes und ist für den Eingriff in die Auslösehebelkinematik des jeweils an einer Seite anzuordnenden, einpoligen Leitungsschutzschalter vorgesehen.

Der Zentrierrahmen 10 besteht aus Kunststoff. Seine wirksame Breite b, siehe Fig. 2, entspricht wenigstens der halben oder mehrfachen Hälfte der Breite eines üblichen einpoligen Leitungsschutzschalters, wie in Fig. 3 gezeigt. In der Fig. 3 ist eine dreipolige Leitungsschutzschaltereinheit 30 mit zwei Zentrierrahmen 10 und drei einpoligen Leitungsschutzschaltern 31, 32, 33 dargestellt, die durch die Federklammern 44, 44' und 45 an der Oberseite und an der Unterseite jeweils seitlich an Befestigungseinformungen 16' (Fig. 1) verbunden sind. Die Befestigungseinformungen 16' besitzen jeweils zwei Eingriffsvertiefungen 46, 46' (s. Fig. 3) für abgewinkelte Enden der Federklammern 44, 44', 45 (Fig. 3 + 4), die zum Aufbau der mehrpoligen Leitungsschutzschaltereinheit 30 dienen.

Fig. 3 zeigt die Seite der Einheit 30, die nach dem vorgesehenen Einbau der Einheit auf einer nicht dargestellten Pofilschiene unten liegt. Deutlich zu erkennen sind die Kühlschlitze 21 sowie die formentsprechende Ausgestaltung des Zentrierrahmens 10 für die exakte parallele Anordnung benachbarter einpoliger Leitungsschutzschalter 31 bis 33.

Fig. 4 zeigt eine Seitenansicht der Einheit 30, aus der gleichzeitig die standartisierte Anordnung von Gehäusebefestigungsbohrungen 34, 35 und 36 zu entnehmen ist, auf deren Anordnung die Lage der Zentrieranformungen 15, 14 und 16 abgestimmt ist. Durch die Gehäusebefestigungsbohrungen 34 bis 36 werden übliche Befestigungsmittel wie Schrauben, Nieten oder dgl. zur Befestigung von Gehäusehälften 37 und 38 (vgl. Fig. 3) geführt. In den Gehäusehälften 37 und 38 sind weiterhin eine Schwenkanformung 39 und eine bogenförmige Durchtrittsbohrung 40 gebildet, durch die ein Mitnehmer 26 in die nicht dargestellte Auslösehebelkinematik im Inneren des Gehäuses des einpoligen Leitungsschutzschalters eingreifen kann.

In Fig. 4 ist weiterhin an der Unterseite des einpoligen Leitungsschutzschalters 31 eine Einhängeausnehmung 41 für eine nicht dargestellte Profilschiene sowie ein in Eingriff schwenk- und verrastbares Arretierelement 42 für die nicht dargestellte Profilschiene gezeigt.

Ein Schaltknebel 43 ragt aus dem Gehäuse in Fig. 4 nach oben heraus. Bei der in Fig. 3 gezeigten Einheit 30 können alle Schaltknebel 43 in nicht dargestellter Weise durch einen gemeinsamen aufgesetzten Verbindungssteg verbunden sein.

In Fig. 3 sind zwei Federklammern 44 und 45 gezeigt, die sich beiderseits über den jeweiligen Zentrierrahmen 10 hinaus in die Profileinformungen 16' der einpoligen Schutzschalter 31, 32 und 33 erstrecken. Alternativ können auch längere Federklammern vorgesehen sein, die den Leitungsschutzschalter 31 direkt mit dem Leitungsschutzschalter 33 verbinden und zwei Zentrierrahmen 10 überbrücken.

Die Zentrierrahmen 10 nebst Federklammern 44, 44', 45 lassen sich für den Aufbau von Einheiten besonders günstig in einem Set zusammen mit elektrischen Verbindungsbrücken und Bezeichnungsschildern, ggf. gleich zusammen mit Leitungsschutzschaltern konfektionieren und sind dadurch in geeigneter Anzahl bei der Installationsmontage vor Ort für den jeweiligen Bedarfsfall verfügbar.

## Patentansprüche

1. Vorrichtung zur Herstellung einer mehrpoligen Leitungsschutzschaltereinheit (30) aus einzelnen ein- oder zweipoligen Leitungsschutzschaltern (31, 32, 33), bestehend aus wenigstens einem rahmenförmigen Zwischenteil (10) mit einem Mitnehmer (26) zur kinmatischen Auslösekopplung benachbarter Leitungsschutzschalter (31, 32, 33) und wenigstens zwei Verbindungselementen (44, 44', 45), die wenigstens ein Zwischenteil (10) übergreifen und mit ihren jeweiligen Enden jeweils an einem Gehäuse eines Leitungsschutzschalters (31, 32, 33) befestigt sind.

2. Vorrichtung nach Anspruch 1, dadurch gekennzeichnet, daß zu der Vorrichtung weiterhin wenigstens eine elektrische Verbindungsbrücke und wenigstens ein Bezeichnungsschild gehören.

3. Vorrichtung nach einem der vorangehenden Ansprüche, dadurch gekennzeichnet, daß die Verbindungselemente (44, 44', 45) mit ihren Enden an den Gehäusen der Leitungsschutzschalter (31, 32, 33) einrastbar sind.

4. Vorrichtung nach einem der vorangehenden Ansprüch, dadurch gekennzeichnet, daß die Verbindungselemente (44, 44', 45) an gegenüberliegenden Seiten der Gehäuse der Leitungsschutzschalter (31, 32, 33) angeordnet sind.

5. Vorrichtung nach einem der vorangehenden Ansprüche, dadurch gekennzeichnet, daß die Verbindungselemente (44, 44' 45) an einer Oberseite und einer Unterseite der Gehäuse der Leitungsschutzschalter (31, 32, 33) gehäuseseitig geführt angreifen.

6. Vorrichtung nach einem der vorangehenden Ansprüche, dadurch gekennzeichnet, daß die Verbindungselemente (44, 44' 45) aus Federklammern bestehen.

7. Vorrichtung nach einem der vorangehenden Ansprüche, dadurch gekennzeichnet, daß das rahmenförmige Zwischenteil (10) Kühlschlitze (20, 21) aufweist.

8. Vorrichtung nach einem der vorangehenden Ansprüche, dadurch gekennzeichnet, daß das Zwischenteil (10) als Zentrierrahmen ausgebildet ist, der beiderseits wenigstens zwei Zentrieranformungen (14, 15, 16) besitzt, die in vorhandene Gehäusebefestigungsbohrungen (34, 35, 36) der benachbarten Leitungsschutzschalter (31, 32, 33) eingreifen.

9. Vorrichtung nach Anspruch 8, dadurch gekennzeichnet, daß die Zentrieranformungen (14, 15, 16) eine durchgehende Bohrung aufweisen.

10. Vorrichtung nach einem der vorangehenden Ansprüche, dadurch gekennzeichnet, daß der Mitnehmer (26) an einem Schwenkarm (25) befestigt ist, der eine Schwenkwelle (24) aufweist, die in eine am Zentrierrahmen gebildete Lageranformung (22) eingreift.

11. Vorrichtung nach einem der vorangehenden Ansprüche, dadurch gekennzeichnet, daß der Zentrierrahmen (10) im Bereich seiner Rahmenmittelebene durchgehend bis auf einen Mitnehmerschwenkbereich (12) eine Trennwand (13) aufweist.

12. Vorrichtung nach einem der vorangehenden Ansprüche, dadurch gekennzeichnet, daß die für den wechselseitigen Abstand benachbarter Leitungsschutzschalter (31, 32, 33) sorgende Breite (b) des Zentrierrahmens (10) der halben oder einer mehrfachen Hälfte der Breite eines Leitungsschutzschalters (31, 32, 33) entspricht.

13. Vorrichtung nach einem der vorangehenden Ansprüche, dadurch gekennzeichnet, daß der Zentrierrahmen (10) aus Kunststoff besteht.

14. Vorrichtung nach einem der Ansprüche 1 - 6, dadurch gekennzeichnet, daß der Zentrierrahmen (10) wenigsten teilweise aus Metall, vorzugsweise Aluminium, besteht.

15. Vorrichtung nach einem der vorangehenden Ansprüche, dadurch gekennzeichnet, daß für die Leitungsschutzschaltereinheit (30) eine lösbare Befestigung einer Profilschiene mittels wenigstens eines verrastbaren Arretierelements (42) vorgesehen ist.
